# EUROPÄISCHE PATENTSCHRIFT

(11) **EP 0 358 041 B1**
(45) Veröffentlichungstag und Bekanntmachung des Hinweises auf die Patenterteilung: **07.07.1993**
(21) Anmeldenummer: 89115502.0
(22) Anmeldetag: 23.08.1989
(51) Int. Cl.: F24D 3/10, F24D 11/00

(54) **Verfahren zum Beheizen eines Gebäudes und Heizungsanlage**
Process for heating a building, and heating installation
Procédé pour chauffer un bâtiment et installation de chauffage

(30) Priorität: 27.08.1988 DE 3829097
(43) Veröffentlichungstag der Anmeldung: 14.03.1990
(73) Patentinhaber: Dorfmüller, Joachim, D-70374 Stuttgart (DE)
(72) Erfinder: Dorfmüller, Joachim, D-70374 Stuttgart (DE)
(74) Vertreter: Patentanwälte Ruff, Beier, Schöndorf und Mütschele

(56) Entgegenhaltungen:
- FR-A- 2 452 675
- FR-A- 2 505 459
- FR-A- 2 566 885

## Beschreibung

Die Erfindung betrifft ein Verfahren zum Beheizen eines Gebäudes mit einem mindestens einen Heizkörper aufweisenden Heizkreislauf, durch den Wasser durch eine Pumpe angetrieben zirkuliert.

Bei der Beheizung von Gebäuden mit Hilfe von wasserdurchströmten Fußbodenheizungen ist es besonders wichtig, daß die Temperatur des Wassers in den Fußbodenheizkörpern nicht über einen Wert von beispielsweise 25° C ansteigt. Mit den herkömmlichen Arten der Einstellung der Temperatur des Vorlaufs bei einer Zentralheizungsanlage ist dies nur schwer möglich.

Es ist bereits ein Verfahren und eine Anlage zum Beheizen eines Gebäudes mit einem einen Heizkörper aufweisenden Heizkreislauf bekannt (FR-A-2 452 675), durch den Wasser durch eine Pumpe angetrieben zirkuliert, das bei Wärmebedarf aus einem Tank entnommen wird. Besteht kein Wärmebedarf, so wird der Heizkreislauf mit Hilfe eines 3-Wege-Ventils von dem Tank abgekoppelt.

Der Erfindung liegt die Aufgabe zugrunde, ein Verfahren zum Beheizen eines Gebäudes zu schaffen, mit dem die Temperatur des durch die Heizkörper strömenden Wassers sehr feinfühlig eingestellt werden kann.

Zur Lösung dieser Aufgabe ist ein Verfahren mit den Merkmalen des Anspruches 1 vorgesehen.

Dies bedeutet, daß zunächst ein praktischer geschlossener Heizkreislauf existiert, der nicht durch den Tank mit wärmerem Wasser führt. Erst wenn eine Temperatursteuerung oder der Benutzer feststellt, daß die Temperatur des Gebäudes bzw. Raumes erhöht werden soll, wird das Wasser durch wärmeres Wasser aus dem Tank ersetzt. Sobald festgestellt wird, daß die Temperatur im Heizkreislauf auf einen etwas höheren Wert angestiegen ist, wird der Heizkreislauf wieder von dem Tank abgekoppelt und es fließt wiederum Wasser mit einer konstanten wärmeren Temperatur durch den Heizkreislauf. Auf diese Weise läßt sich sehr feinfühlig die Temperatur dosieren und kann mit einfachem Aufwand dafür gesorgt werden, daß die Temperatur in dem Heizkreislauf den genannten Wert von beispielsweise 25 °C nicht überschreitet.

Dabei ist vorgesehen, daß das Wasser im Heizkreislauf durch einen etwa auf der Hohe des Tanks angeordneten Zirkulationsbehälter geleitet wird, aus dessen unterem Bereich das Wasser bei Wärmebedarf abgezogen und in dessen oberen Bereich das wärmere Wasser eingeleitet wird. Dieser Zirkulationsbehälter dient dazu, daß der Heizkreislauf eine gewisse thermische Trägheit aufweist, so daß nicht zu häufig ein Ersetzen von Wasser erforderlich ist. Andererseits soll der Zirkulationsbehälter so klein beschaffen sein, daß die thermische Trägheit nicht zu groß ist, damit nicht bei einer Temperaturanpassung ein Überschießen der Temperatur auftritt. Insbesondere soll die Wassermenge in dem Zirkulationsbehälter klein sein gegenüber der Wassermenge in dem Tank.

Da das Wasser in den Zirkulationsbehälter des Heizkreislaufs an einer Stelle unterhalb der zu dem Heizkörper führenden Leitung eingespeist wird, findet schon eine Vermischung des wärmeren Wassers aus dem Tank mit dem kälteren Wasser in dem Zirkulationsbehälter statt.

Durch das nur bei Bedarf kurzzeitig vorkommende Austauschen von Wasser kann im übrigen dafür gesorgt werden, daß die Temperatur der Heizungsanlage unabhängig davon ist, wie hoch die Temperatur des Wassers in dem Tank ist. Auf diese Weise läßt sich das Verfahren insbesondere mit solarbetriebenen Heizungsanlagen verwenden, bei denen nicht vorauszusehen ist, welche Temperatur das Wasser in dem Tank aufweist.

In Weiterbildung der Erfindung kann vorgesehen werden, daß zur Ermittlung des Wärmebedarfs nicht nur die Raumtemperatur des zu beheizenden Raums, sondern auch die Temperatur im oberen Bereich des Zirkulationsbehälters berücksichtigt wird. Damit kann ebenfalls erreicht werden, daß ein Überschießen der Temperatur bei einem Regelungsvorgang nicht auftritt.

Zur Bestimmung der Temperatur des Wassers in dem Zirkulationsbehälter kann die Temperatur an einer Stelle gemessen werden, die zwischen der Einleitungsstelle des wärmeren Wassers aus dem Tank und der weiterführenden Leitung liegt.

Besonders günstig ist es, wenn in Weiterbildung der Erfindung der Tank im Nebenschluß durchströmt wird. Auch dies führt dazu, daß die Temperatur durch das Einmischen des wärmeren Wassers, falls dies deutlich höhere Temperatur hat, besonders behutsam erfolgt.

Da das wärmere Wasser aus dem Tank nur bei Bedarf entnommen und durch kälteres Wasser ersetzt wird, und da die von der Erfindung vorgeschlagene Art der Temperaturregelung unabhängig von der Temperatur des Wassers im Tank ist, kann zum Erwärmen des Wassers im Tank erfindungsgemäß vorgesehen sein, daß das Wasser im Tank durch eine Zusatzheizung geringer Leistung erwärmt wird. Diese Heizung kann dann praktisch kontinuerlich laufen, ggf. bis eine Maximaltemperatur im Tank erreicht ist. Als Zusatzheizung geringer Leistung kann beispielsweise eine kleine Nachtstromheizung oder eine kleine Gasheizung Verwendung finden. Besonders günstig ist es jedoch, wenn das Wasser in dem Tank durch eine Solaranlage mit einem mindestens einen Solarkollektor enthaltenden Solarkreislauf erwärmt wird. Das Erwärmen des Wassers in dem Solarkreislauf und damit das Erwärmen des Wassers in dem Tank ist vollständig unabhängig von dem Wärmebedarf in der Heizungsanlage, so daß diese Abkopplung von Wärmeerzeugung und Wärmeabnahme mit dem von der Erfindung vorgeschlagenen Verfahren besonders günstig durchgeführt werden kann.

Erfindungsgemäß kann in Weiterbildung vorgesehen sein, daß das Wasser in den Solarkreislauf durch einen etwa auf der Höhe des Tanks angeordneten Zirkulationsbehälter geleitet wird. Dieser Zirkulationsbehälter hat eine ähnliche Aufgabe wie der Zirkulationsbehälter in dem Heizkreislauf. Er kann nämlich dazu verwendet werden, die thermische Trägheit in dem Solarkreislauf auf bestimmten Werten zu halten. Die thermische Trägheit des Solarkreislaufs soll relativ niedrig liegen, jedoch immerhin einen gewissen Wert erreichen. So schlägt die Erfindung in Weiterbildung vor, daß das Wasser aus dem Zirkulationsbehälter nur dann in den Tank abgezogen und durch kaltes Wasser aus dem unteren Bereich des Tanks ersetzt wird, wenn die Wassertemperatur im Zirkluationsbehälter höher liegt als eine mittlere Temperatur des Tanks. Vor Erreichen dieser Temperatur wird der Solarkreislauf in einem geschlossenen Kreislauf durchströmt, so daß das Wasser sich ständig weiter erwärmt. Erst bei Erreichen einer höheren Temperatur wird das warme Wasser abgezogen. Es wird dabei, wie in Weiterbildung vorgesehen sein kann, aus dem oberen Bereich des Zirkulationsbehälters entnommen und in den oberen Bereich des Tanks geleitet. Aus dem Tank wird dann das kältere Wasser an der Unterseite entnommen und ebenfalls in den unteren Bereich des Zirkulationsbehälters eingeleitet. Auch hier kann vorgesehen sein, daß der Tank im Nebenstrom durchströmt wird.

In Weiterbildung der Erfindung kann vorgesehen sein, daß die Wasserzirkulation in dem Solarkreislauf durch eine Pumpe dann in Gang gesetzt wird, wenn die Temperatur an den Solarkollektoren höher ist als eine vorher bestimmte feste Temperatur von beispielsweise 15°C. Sobald bei Beginn des Sonnenscheins die Temperatur an den Solarkollektoren nur etwas ansteigt, kann der Solarkreislauf bereits in Betrieb genommen werden und sich erwärmen. Es kann also die Sonnenstrahlung bereits zu einem Zeitpunkt ausgenutzt werden, wo die Temperatur an den Solarkollektoren noch niedriger liegt als das Wasser in dem Tank.

In Weiterbildung der Erfindung kann vorgesehen sein, daß der Heizkreislauf und der Solarkreislauf drucklos sind. Dies macht die Installation einfacher. Insbesondere bei dem Solarkreislauf hat dies den Vorteil, daß dieser bei Abschalten der Pumpe leerfließt.

Erfindungsgemäß kann vorgesehen sein, daß das Wasser aus dem Zirkulationsbehälter des Solarkreislaufs an einer Stelle unterhalb des Mündung der von den Solarkollektoren kommenden Leitung entnommen wird, und daß die Temperatur zwischen diesen beiden Stellen gemessen wird.

Der Erfindung liegt ebenfalls die Aufgabe zugrunde, eine Heizungsanlage zu schaffen, die zu einer einfach durchzuführenden Temperaturregelung in Gebäuden mit Hilfe von Niedrigtemperaturheizkörpern verwendet werden kann. Zur Lösung dieser Aufgabe schlägt die Erfindung eine Heizungsanlage mit den Merkmalen des Anspruchs 7 vor.

Die Herstellung der Verbindung durch eine oder beide dieser Leitungen geschieht durch eine in einer der beiden Leitungen angeordnete Pumpe, die von der Temperaturregelungseinrichtung angesteuert wird. Diese Pumpe sperrt die Verbindung, wenn sie nicht in Betrieb ist. Sie braucht dabei nur in einer der Leitungen angeordnet zu sein, da bei Unterbrechung der Verbindung durch eine der Leitungen auch die andere Leitung nicht durchströmt wird. Insbesondere ist es günstig, wenn die Pumpe in der unteren Verbindungsleitung zwischen dem Heizkreislauf und dem Tank angeordnet ist und in Richtung von dem Heizkreislauf zu dem Tank arbeitet. Sie pumpt also kaltes Wasser aus dem Heizkreislauf in dem Tank. Die gleiche Menge an warmem Wasser strömt dann durch die obere Verbindungsleitung in umgekehrter Richtung.

Die obere Verbindungsleitung zwischen dem Tank und dem Zirkulationsbehälter mündet in diesem unterhalb der zu den Heizkörpern führenden Leitung des Heizkreislaufs. Dies führt dazu, daß das ausströmende Wasser sich im Zirkulationsbehälter zunächst mit dem dort vorhandenen Wasser vermischt, bevor es in die Leitung zu den Heizkörpern gelangt.

Der Temperaturfühler, der die Temperatur in dem Zirkulationsbehälter registrieren soll, ist mit Vorteil in der Höhe zwischen den beiden Leitungen an oder in dem Zirkulationsbehälter angeordnet.

Wenn, wie die Erfindung vorschlägt, der Heizkreislauf und der Tank drucklos arbeiten, so kann erfindungsgemäß vorgesehen sein, daß der Zirkulationsbehälter mit dem Tank über eine Entlüftungsleitung verbunden ist, wobei vorzugsweise der Tank weiter entlüftet ist. Bei drucklosen Systemen bildet sich eine Wasseroberfläche in dem Tank und in dem Zirkulationsbehälter.

In Weiterbildung der Erfindung kann vorgesehen sein, daß die Heizungsanlage einen Solarkreislauf aufweist, der mindestens einen Solarkollektor, eine Umwälzpumpe und einen etwa auf der Höhe des Tanks angeordneten Zirkulationsbehälter enthält. Dieser ist mit dem Tank in seinem oberen und unteren Bereich über je eine Leitung verbunden. Eine Verbindung durch die Leitungen kann durch die Steuerung der Solaranlage hergestellt werden. Dies kann beispielsweise durch Servoventile geschehen. Besonders günstig ist es wiederum, wenn in einer der beiden Leitungen eine von der Steuerung der Solaranlage einschaltbare Pumpe angeordnet ist. Im Fall des Zirkulationsbehälters für die Solaranlage ist dies vorzugsweise in der oberen Leitung eine Pumpe, die in Richtung von dem Solarkreislauf zu dem Tank arbeitet.

Die Steuerung der Solaranlage ist derart eingestellt, daß sie die Umwälzpumpe dann in Betrieb setzt, wenn die Temperatur an den Solarkollektoren größer ist als eine vorbestimmte Temperatur von beispielsweise 15°C.

Eine Steuerung setzt die Verbindung zwischen dem Zirkulationsbehälter und dem Tank in Kraft, wenn die Temperatur im Zirkulationsbehälter höher ist als eine Temperatur des Tanks in dessen mittlerem Bereich. Auf diese Weise kann eine gute Temperaturschichtung in dem Tank hergestellt werden, so daß dort oben warmes und unten kaltes Wasser vorhanden ist, ohne daß eine Vermischung stattfindet.

In Weiterbildung kann vorgesehen sein, daß die Verbindungsleitung zwischen Tank und Zirkulationsbehälter des Solarkreislaufs unterhalb der von den Solarkollektoren kommenden Leitung in den Zirkulationsbehälter mündet. Zwischen diesen beiden oberen Leitungen kann mit Vorteil der Temperaturfühler an bzw. in dem Zirkulationsbehälter angeordnet sein.

Erfindungsgemäß kann vorgesehen sein, daß die Wassermenge im Solarkreislauf klein gegenüber der Wassermenge im Tank ist.

Beispielsweise kann das Verhältnis von Inhalt des Zirkulationsbehälters zu Tankinhalt etwa 1 % betragen.

Der Zirkulationsbehälter für den Heizkreislauf und/oder der Zirkulationsbehälter für den Solarkreislauf können mit Vorteil die gleiche Höhe wie der Tank aufweisen. Wenn sie eine kleinere Höhe aufweisen, was ebenfalls möglich ist, sollten ihre Oberseiten miteinander etwa fluchten, was insbesondere bei drucklosen Systemen wichtig ist, da im Tank und den Zirkulationsbehältern sich der gleiche Wasserstand einstellt.

Beispielsweise können die Zirkulationsbehälter mit Vorteil eine zylindrische Form aufweisen, deren Durchmesser im Bereich von etwa zehn bis etwa 50 cm liegt.

Für den Winter, in dem die Solaranlage nicht genügend Wärme liefert, kann als Zusatz zur Beheizung des Wassers im Tank eine fremdbetriebene Heizungseinrichtung niedriger Leistung vorgesehen sein, beispielsweise eine Gastherme oder eine mit Nachtstrom betriebene elektrische Heizungseinrichtung.

In Weiterbildung der Erfindung kann vorgesehen sein, daß der Tank einen Wärmetauscher für Brauchwasser aufweist.

Der Tank wird erfindungsgemäß nur soweit gefüllt, daß das Wasser aus dem Heizkreislauf und dem Solarkreislauf noch in ihm Platz hat.

Die Erfindung schlägt ebenfalls die Verwendung einer derartigen Heizungsanlage zum Beheizen eines Gebäudes nach dem genannten Verfahren vor.

Weitere Merkmale, Einzelheiten und Vorzüge der Erfindung ergeben sich aus der folgenden Beschreibung einer bevorzugten Ausführungsform der Erfindung sowie anhand der Zeichnung. Hier zeigen:
- Fig. 1: stark vereinfacht das Schema einer Heizungsanlage mit einem Tank, einem Heizkreislauf und einem Solarkreislauf;
- Fig. 2: schematisch die Anordnung eines Zirkulationsbehälters für den Heizkreislauf;
- Fig. 3: schematisch die Anordnung des Zirkulationsbehälters für den Solarkreislauf.
- Fig. 4: weiter vereinfacht ein gegenüber Fig. 1 abgeändertes Schema.

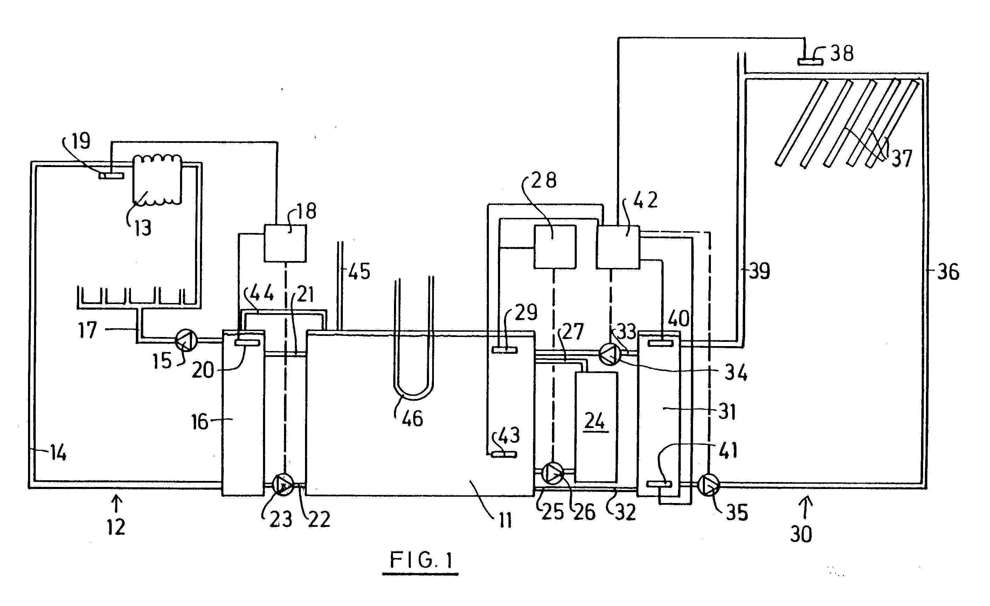

Bei der in Fig. 1 schematisch dargestellten Heizungsanlage ist ein beispielsweise im Keller eines Gebäudes unterzubringender großer Tank 11 vorhanden, der zur Aufnahme von Wasser dient. Dieses Wasser dient als Medium zum Speichern von Wärme. In Fig. 1 links von dem Tank 11 ist der Heizkreislauf dargestellt, während rechts von dem Tank der Solarkreislauf und eine Zusatzheizung dargestellt sind. Der Heizkreislauf 12 enthält zunächst ein System von Leitungen, die Wasser als Wärmemittel zu einem oder mehreren Heizkörpern 13 bringen, von wo aus das Wasser durch eine Rückkehrleitung 14 zurückströmt. Angetrieben wird das zirkulierende Wasser von einer Pumpe 15. Erfindungsgemäß enthält der Heizkreislauf 12 einen neben dem Tank 11 etwa in gleicher Höhe angeordneten Zirkulationsbehälter 16. Das in dem Zirkulationsbehälter 16 enthaltene Wasser wird über eine Leitung 17 im oberen Bereich entnommen und von der Pumpe 15 zu einem Verteiler 17 gepumpt. Von dem Verteiler 17 aus gelangt das Wasser dann zu den einzelnen Heizkörpern, wobei in der vereinfachten Darstellung der Fig. 1 nur ein einzelner Heizkörper 13 dargestellt ist. Von den Heizkörpern 13 aus gelangt das Wasser über die Rückkehrleitung 14 wieder zurück in den Zirkulationsbehälter. Der Zirkulationsbehälter wird von Wasser nur durchströmt, er enthält selbst keine Heizeinrichtung. Für den Heizkreislauf 12 ist eine Raumtemperaturregelung vorgesehen, die eine Steuereinrichtung 18 aufweist. Die Steuereinrichtung 18 mißt mit Hilfe eines ersten Temperaturfühlers 19 die Raumtemperatur des zu beheizenden Raumes, und mit einem zweiten Temperaturfühler 20 die Temperatur des Wasser im oberen Bereich des Zirkulationsbehälters 16. Aufgrund der Informationen beider Temperaturfühler 19, 20 ermittelt die Steuereinrichtung 18, wann sie das Wasser in dem Heizkreislauf 12 zu erwärmen hat und wann sie mit dieser Erwärmung aufhören soll.

Der Zirkulationsbehälter ist im oberen Bereich mit einer ersten Verbindungsleitung 21 für warmes Wasser und in seinem unteren Bereich mit einer zweiten Verbindungsleitung 22, und zwar für Kaltwasser, verbunden. In der unteren Verbindungsleitung für Kaltwasser ist eine Pumpe 23 angeordnet, die, wenn sie nicht in Betrieb ist, die Verbindungsleitung 22 sperrt. Eingeschaltet und ausgeschaltet wird die Pumpe 23 von der Steuerungseinrichtung 18 der Heizungsanlage. Sobald diese feststellt, daß eine Erhöhung der Temperatur des Wassers im Heizkreislauf 12 erforderlich ist, setzt sie die Pumpe 23 in Gang. Dadurch wird kälteres Wasser aus dem unteren Bereich des Zirkulationsbehälters 16 abgezogen und in dem Tank 11 gepumpt. Die gleiche Menge Wasser fließt aus dem Tank 11 durch die Verbindungsleitung 21 zurück in den Zirkulationsbehälter 16. Das Wasser im Tank 11 ist aber in der Regel wärmer als das Wasser im Heizkreislauf 12, so daß sich die Temperatur im Heizkreislauf 12 durch das Einmischen des wärmeren Wassers erhöht. Sobald die Steuereinrichtung 18 aufgrund der Informationen des Temperaturfühlers 20 feststellt, daß das Wasser im Heizkreislauf auf eine Temperatur von beispielsweise 25 oder 26 °C angestiegen ist, schaltet sie die Pumpe 23 wieder ab. Jetzt strömt im Heizkreislauf 12 das etwas wärmer gewordene Wasser und führt zum Erhöhen der Temperatur des zu heizenden Gebäudes.

Die Figur 1 ist nicht maßstabsgerecht gezeichnet. Dennoch ist zu sehen, daß der Rauminhalt des Zirkulationsbehälters 16 wesentlich niedriger ist als der des Tankes 11. Der Tank 11 soll möglichst groß sein, um eine möglichst große Wärmemenge speichern zu können. Der Zirkulationsbehälter 16 soll dagegen klein sein, damit die thermische Trägheit des Heizkreislaufs nicht zu groß wird. Er soll andererseits auch nicht zu klein sein, damit das Zumischen von wärmerem Wasser nicht zu häufig geschieht. Er soll eine gewisse ausgleichende Funktion für die Temperatur übernehmen.

Das Wasser im Tank 11 kann auf zweierlei Art erwärmt werden. Zum einen ist eine fremdbetätigte Zusatzheizung vorgesehen, die immer dann in Betrieb genommen wird, wenn das Wasser im oberen Bereich des Tanks 11 eine bestimmte Temperatur von beispielsweise 40 °C unterschreitet. Die Zusatzheizung ist über eine untere Verbindungsheizung 25 mit dem Tank verbunden. In dieser unteren Verbindungsleitung 25 ist eine Pumpe 26 eingesetzt. Die Zusatzheizung 24 ist weiterhin über eine obere Verbindungsleitung 27 mit dem oberen Bereich des Tankes 11 verbunden. Angesteuert wird die Zusatzheizung 24 und ihre Pumpe 26 von einer Steuereinrichtung 28, die die Temperatur im oberen Bereich des Tanks 11 mit Hilfe eines Temperaturfühlers 29 mißt. Sobald die Temperatur beispielsweise 40 °C unterschreitet, schaltet die Steuereinrichtung 28 die Pumpe 26 und die Beheizung der Zusatzheizung 24 ein, so daß Wasser aus dem unteren Bereich des Tanks 11 entnommen, in der Zusatzheizung 24 erhitzt und durch die Verbindungsleitung 27 in den oberen Bereich des Tanks eingespeist wird. Sobald die Temperatur am Temperaturfühler 29 beispielsweise 50 °C erreicht, wird die Heizung wieder ausgeschaltet.

Diese Zusatzheizung 24 braucht nur eine geringe Leistung abzugeben, da sie kontinuierlich arbeiten kann.

Als eigentliche Erwärmung für das Wasser im Tank 11 ist eine Solaranlage mit einem Solarkreislauf 30 vorgesehen. Der Solarkreislauf enthält ähnlich wie der Heizkreislauf einen Zirkulationsbehälter 31, der etwa auf gleicher Höhe wie der Tank 11 angeordnet ist und auch etwa die gleiche Höhe aufweist. Der Zirkulationsbehälter 31 ist mit dem Tank 11 über eine untere Verbindungsleitung 32 und eine obere Verbindungsleitung 33 verbunden. In der oberen Verbindungsleitung 33 ist eine Pumpe 34 angeordnet, die in ähnlicher Weise aufgebaut ist, wie die Pumpe 23 der Verbindungsleitung 22.

Der Solarkreislauf enthält eine Umwälzpumpe 35, die Wasser aus dem unteren Bereich des Zirkulationsbehälters 31 entnimmt und über eine Steigleitung 36 zu den nur schematisch dargestellten Solarkollektoren 37 pumpt. Als Solarkollektoren finden vorzugsweise Vakuumkollektoren Verwendung, bei denen die Wärme an einem, nämlich dem oberen Ende der Kollektoren abgegeben wird. An diesem Ende führt die Leitung 36 vorbei, so daß die Kollektoren 37 das dort vorhandene Wasser erwärmen. Die Temperatur von den Kollektoren 37 wird von einem Temperaturfühler 38 ermittelt. Das von den Solarkollektoren 37 aufgeheizte Wasser gelangt durch eine entlüftete Falleitung 39 in den oberen Bereich des Zirkulationsbehälters 31. Dort wird seine Temperatur mit einem weiteren Temperaturfühler 40 gemessen. Auch im mittleren Bereich des Zirkulationsbehälters 31 ist ein Temperaturfühler 41 angeordnet. Die Temperaturfühler 40, 41 im Zirkulationsbehälter 31 und der Temperaturfühler 38 für die Solarkollektoren 37 sind mit einer Steuereinrichtung 42 für die Solaranlage verbunden. Diese Steuereinrichtung 42 ermittelt über einen nochmaligen Temperaturfühler 43 die Temperatur in einem mittleren oder unteren Bereich des Tanks 11. Auch die Temperatur im oberen Bereich des Tanks 11 kann hier über den Temperaturfühler 29 mitgeteilt werden.

Die Wirkungsweise der Solaranlage ist die folgende. Die Steuereinrichtung 42 stellt fest, wann die Temperatur an den Solarkollektoren 37 höher ist als eine vorher eingestellte feste Temperatur von z. B. 15 °C. Sobald dies der Fall ist, wird die Pumpe 35 in Gang gesetzt. Diese pumpt das kalte Wasser aus dem Zirkulationsbehälter 31 über die Steigleitung 36 zu den Solarkollektoren, wo es erwärmt wird und über die Falleitung 39 in den Zirkulationsbehälter 31 zurückkehrt. Die Pumpe 34 ist zu diesem Zeitpunkt außer Betrieb. Das nun schon etwas wärmere Wasser wird beim nächsten Umlauf nochmals geheizt. Durch ständiges Umwälzen des Wassers im Solarkreislauf 30 wird das Wasser also immer wärmer, bis es zu einem bestimmten Zeitpunkt wärmer ist als das Wasser im mittleren Bereich des Tanks 11. Zu diesem Zeitpunkt schaltet die Steuereinrichtung 42 die Pumpe 34 ein, die das Wasser aus dem oberen Bereich des Zirkulationsbehälters 31 in den oberen Bereich des Tanks einpumpt, und zwar unterhalb von dessen Wasserstand. Das aus dem Zirkulationsbehälter 31 entnommene warme Wasser wird durch kälteres Wasser aus dem unteren Bereich des Tankes 11 über die Leitung 32 ersetzt, so daß dieses kältere Wasser nunmehr von den Solarkollektoren 37 erwärmt wird.

Das Volumen des Zirkulationsbehälters 31 wird derart gewählt, daß die Wärmekapazität einerseits klein genug ist. Andererseits soll die Menge groß genug sein, damit das Wasser im Zirkulationsbehälter 31 nicht zu schnell die Temperatur erreicht, die im mittleren Bereich des Tanks 11 herrscht.

Sowohl der Heizkreislauf 12 als auch der Solarkreislauf 30 sind offene Systeme, d. h. in ihnen kann in der Rückführleitung 14 bzw. in der Falleitung 39 Luft sein. Im Solarkreislauf 30 ist dies durch die oben offene Abzweigung der Leitung 39 dargestellt. Bei Abschalten der Zirkulationspumpe 35 entleert sich der Solarkreislauf.

Im Zirkulationsbehälter 16, 31 und im Tank 11 soll das gleiche Niveau herrschen. Aus diesem Grunde ist das obere Ende des Zirkulationsbehälter 16 über eine Entlüftungsleitung 44 mit dem Tank 11 verbunden. Der Tank 11 enthält eine Entlüftungsleitung 45, wobei auch der Zirkulationsbehälter 31 eine Entlüftungsleitung aufweist. Auch der Zirkulationsbehälter enthält eine Entlüftung. Alle Entlüftungen können in ein Aktivkohlefilter führen.

Die Fig. 1 deutet an, daß im Tank 11 ein Wärmetauscher 46 vorhanden ist, der zur Bereitstellung von Brauchwasser dient.

Bei einem möglichen Ausführungsbeispiel enthält der Tank 11 etwa 40 cm³ Wasser, der Heizkreislauf etwa 2 cm³ und der Solarkreislauf etwa den gleichen Wert. Die Leistung der Zusatzheizung 24 beträgt beispielsweise 20 kW. Es sind etwa 600 als Vakuumkollektoren ausgebildete Solarkollektoren 37 vorhanden. Diese werden schräg auf einem Dach montiert, wobei beispielsweise durch eine weißgestrichene Wand ihr Wirkungsgrad verbessert werden kann.

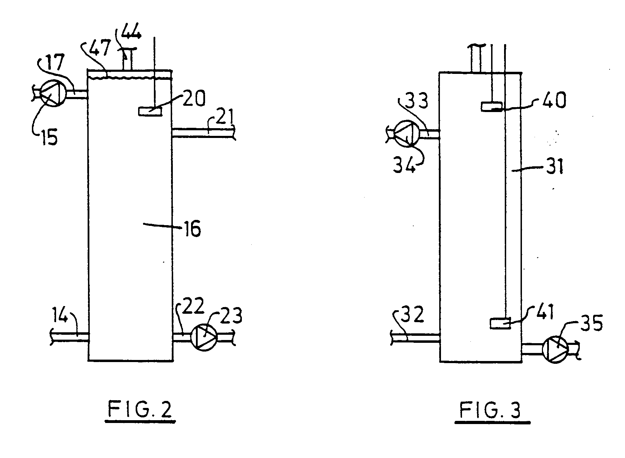

Fig. 2 zeigt ebenfalls vereinfacht den Zirkulationsbehälter 16 für den Heizkreislauf 12. Er ist als Zylinder ausgebildet und hat beispielsweise einen Durchmesser zwischen etwa 10 und etwa 40 cm. In seiner oberen Stirnfläche ist die Entlüftungsleitung 44 angeordnet. Der Wasserspiegel ist mit der Wellenlinie 47 angedeutet. Die Leitung 17 zur Umwälzpumpe 15 mündet etwas unterhalb des Wasserspiegels. Die Verbindungsleitung 21 zum Tank 11 ist unterhalb der Leitung 17 angeordnet, wobei zwischen beiden Höhe der Temperaturfühler 20 angeordnet ist. Die Versetzung der Leitung 21 nach unten führt dazu, daß im Zirkulationsbehälter 16, der ja noch von Wasser durchströmt wird, eine Vermischung des warmen Wassers der Leitung 21 mit dem bereits vorhandenen kälteren Wasser erfolgt. Dadurch gelangt zur Pumpe 15 bereits Wasser mit einer Mischtemperatur und auch der Temperaturfühler 20 mißt nicht die Temperatur des aus der Leitung 21 ausströmenden Wassers.

Ähnliche Verhältnisse gelten bei dem in Fig. 3 schematisch dargestellten Zirkulationsbehälters 31 für die Solaranlage. Das von den Solarkollektoren kommende Wasser wird in den oberen Bereich des Zirkulationsbehälters 31, der beispielsweise Form und Größe wie der Zirkulationsbehälter 16 aufweisen kann, eingeleitet. Die Verbindungsleitung 33 zum Tank 11 liegt deutlich unterhalb dieser Einleitungsstelle und der Temperaturfühler 40 liegt zwischen beiden Stellen.

Der zweite Temperaturfühler 41 ist im unteren bis mittleren Bereich des Zirkulationsbehälters 31 angeordnet.

Bei beiden Zirkulationsbehältern ist es wichtig, daß sie mit oberen Bereich mit dem Tank 11 fluchten, da in beiden Zirkulationsbehältern 31 sich ein Wasserspiegel bildet. Wenn kürzere Zirkulationsbehälter 31, 16 verwendet werden, werden sie so angeordnet, daß sie oben etwa auf gleicher Höhe stehen wie der Tank 11.

Während bei dem Zirkulationsbehälter 31 das zu den Kollektoren führende Wasser aus dem unteren Bereich entnommen wird, ist es ebenfalls möglich, das Wasser aus dem mittleren Bereich oder auch aus dem mittleren und unteren Bereich gleichzeitig zu entnehmen. Im letzten Fall kann das Verhältnis von Wasser aus dem mittleren und unteren Bereich von 1 verschieden sein. Dadurch kann ein zu starkes Absinken der Temperatur des zu den Kollektoren gepumptes Wassers verhindert werden.

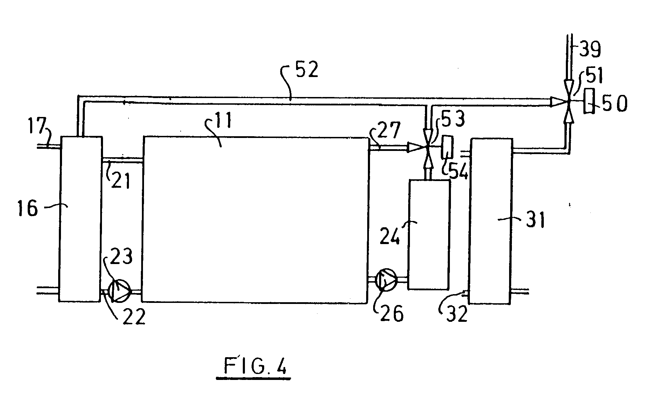

Bei der Anlage der Fig. 4 sind nur wenige Unterschiede gegenüber der Anlage nach Fig. 1 vorhanden, so daß die Anlage nicht nochmals vollständig gezeichnet wird. Zur besseren Orientierung sind die Zirkulationsbehälter 31 für den Solarkreislauf 30, der Tank 11 und der Zirkulationsbehälter 16 für den Heizungskreislauf nochmal dargestellt.

Die von den Solarkollektoren 37 kommende Leitung, durch die also das erwärmte Wasser fließt, gelangt nicht wie bei der Anlage der Fig. 1 direkt in den Zirkulationsbehälter 31, sondern zu einem durch einen Elektroantrieb 50 betätigbaren Mehrwegeventil 51. Dieses kann durch den Elektroantrieb 50 so betätigt werden, daß in der einen Möglichkeit das von den Kollektoren 37 kommende Wasser, genau wie bei der Ausführungsform der Fig. 1, in den zugehörigen Zirkulationsbehälter 31 strömt. Das Ventil 51 kann aber auch so umgeschaltet werden, daß das erwärmte Wasser über eine Leitung 52 an dem Zirkulationsbehälter 31 und dem Tank 11 lauf 12 fließt. Auf diese Weise kann bei einem plötzlichen Wärmebedarf im Heizungskreislauf das von den Solarkollektoren 37 kommende erhitzte Wasser direkt in den Heizkreislauf 12 eingespeist werden, ohne den Umweg über den Tank 11 zu nehmen.

In ähnlicher Weise ist der Ausgang der zusätzlichen Hilfsbeheizung 24 an ein Mehrwegeventil 53 gelegt, das durch einen Elektroantrieb 54 betätigbar ist. Das Mehrwegeventil 53 kann einerseits so gesteuert werden, daß der Ausgang der Zusatzbeheizung durch die Leitung 27 in den Tank geleitet wird. Dies wäre das gleiche Verfahren wie bei der Ausführungsform nach Fig. 1. Das Ventil 53 kann aber auch so gesteuert werden, daß das von der Zusatzbeheizung 24 erwärmte Wasser über die bereits erwähnte Leitung 52 direkt in den Zirkulationsbehälter 16 des Heizkreislaufs 12 eingespeist wird. Diese Möglichkeit kann ebenfalls dazu verwendet werden, bei einem plötzlichen Wärmebedarf im Kreislauf 12 den Tank 11 zu umgehen.

Es ist auch möglich, die Ventile 51 und 53 so zu schalten, daß das von den Solarkollektoren 37 über die Leitung 39 kommende Wasser zunächst über die Leitung 52 und dann über die Leitung 27 direkt in den oberen Bereich des Tanks 11 gelangt.

Anstelle der 3-Wege-Ventile könne auch je nach gewünschten Schaltmöglichkeiten mehrere einfachere Schieber verwendet werden.

## Patentansprüche

1. Verfahren zum Beheizen eines Gebäudes mit einem mindestens einen Heizkörper (13) aufweisenden Heizkreislauf (12), durch den Wasser durch eine Pumpe (15) angetrieben zirkuliert, wobei bei Wärmebedarf das Wasser aus dem Heizkreislauf (12) abgezogen und in einen Tank (11) mit höher temperiertem Wasser geleitet und das aus dem Heizkreislauf (12) abgezogene Wasser durch wärmeres Wasser aus dem Tank (11) ersetzt wird, dadurch gekennzeichnet, daß das Wasser im Heizkreislauf (12) durch einen etwa auf der Höhe des Tanks (11) angeordneten Zirkulationsbehälter (16) geleitet wird, aus dessen unterem Bereich das Wasser abgezogen und in dessen oberen Bereich das wärmere Wasser an einer Stelle unterhalb der weiterführenden Leitung (17) eingeleitet wird.

2. Verfahren nach Anspruch 1, dadurch gekennzeichnet, daß zur Ermittlung des Wärmebedarfs die Raumtemperatur des zu beheizenden Raums und die Temperatur im oberen Bereich des Zirkulationsbehälters (16) berücksichtigt wird, die vorzugsweise an einer Stelle gemessen wird, die zwischen der Einleitungsstelle des wärmeren Wassers aus dem Tank (11) und der weiterführenden Leitung (17) liegt.

3. Verfahren nach einem der vorhergehenden Ansprüche, dadurch gekennzeichnet, daß das Wasser in dem Tank (11) durch eine Solaranlage mit einem mindestens einen Solarkollektor (37) enthaltenden Solarkreislauf (30) erwärmt wird, wobei vorzugsweise das Wasser in dem Solarkreislauf (30) durch einen etwa auf der Höhe des Tanks (11) angeordneten Zirkulationsbehälter (31) geleitet und aus dem Zirkulationsbehälter (31) des Solarkreislaufs (30) an einer Stelle unterhalb der Mündung der von den Solarkollektoren (37) kommenden Leitung (39) entnommen wird.

4. Verfahren nach einem der vorhergehenden Ansprüche, dadurch gekennzeichnet, daß, wenn die Wassertemperatur im Zirkulationsbehälter (31) höher liegt als eine mittlere Temperatur des Tanks (11), Wasser aus dem oberen Bereich des Zirkulationsbehälters (31) entnommen und in den oberen Bereich des Tanks (11) geleitet wird, und durch Wasser aus dem unteren Bereich des Tanks (11) ersetzt wird, das in den unteren Bereich des Zirkulationsbehälters (31) eingeleitet wird.

5. Verfahren nach einem der Ansprüche 3 - 4, dadurch gekennzeichnet, daß der Tank (11) im Nebenstrom durchströmt wird und/oder der Heizkreislauf (12) und der Solarkreislauf (30) drucklos sind.

6. Verfahren nach einem der Ansprüche 3 - 5, dadurch gekennzeichnet, daß die Wasserzirkulation in dem Solarkreislauf (30) durch eine Pumpe (35) dann in Gang gesetzt wird, wenn die Temperatur an den Solarkollektoren (37) einen bestimmten voreingestellten Wert überschreitet.

7. Heizungsanlage zur Durchführung des Verfahrens nach Anspruch 1, mit einem mindestens einen Heizkörper (13) aufweisenden, wasserdurchströmten Heizkreislauf (12) sowie einer Temperatursteuerung, dadurch gekennzeichnet, daß in dem Heizkreislauf (12) ein Zirkulationsbehälter (16) enthalten ist, der etwa auf gleicher Höhe steht wie ein Wassertank (11) und mit diesem im oberen und unteren Bereich über je eine Leitung (21, 22) verbunden ist, wobei in einer der Leitungen (21, 22) eine von der Temperatursteuerung ansteuerbare Pumpe (23) angeordnet ist, die bei Vorliegen eines Wärmebedarfs eine Verbindung zwischen dem Zirkulationsbehälter (16) und dem Wassertank (11) herstellt, und wobei die obere Leitung (21) in dem Zirkulationsbehälter (16) unterhalb der zu den Heizkörpern (23) führenden Leitung (17) des Heizkreislaufs (12) einmündet.

8. Heizungsanlage nach Anspruch 7, dadurch gekennzeichnet, daß die Pumpe (23) in der unteren Leitung (22) angeordnet ist und in Richtung von dem Heizkreislauf (12) zu dem Wassertank (11) arbeitet, und daß in der Höhe zwischen den beiden Leitungen (17, 21) ein Temperaturfühler (20) an oder in dem Zirkulationsbehälter (16) angeordnet ist.

9. Heizungsanlage nach Anspruch 7 oder 8, dadurch gekennzeichnet, daß sie einen mindestens einen Solarkollektor (37), eine Umwälzpumpe (35) und einen etwa auf der Höhe des Tanks (11) angeordneten Zirkulationsbehälter (31) enthaltenden Solarkreislauf (30) aufweist, wobei der Zirkulationsbehälter (31) mit dem Tank (11) im oberen und im unteren Bereich über je eine Leitung verbunden ist und eine Verbindung zwischen dem Zirkulationsbehälter (31) und dem Tank (11) durch eine Steuerung der Solaranlage insbesondere dadurch herstellbar ist, daß in der oberen Leitung (33) eine in Richtung von dem Solarkreislauf (30) zu dem Tank (11) arbeitende Pumpe (34) angeordnet ist, die von einer Steuerung dann angesteuert wird, wenn die Temperatur im Zirkulationsbehälter (31) höher ist als eine Temperatur des Tanks (11) in dessen mittleren Bereich.

10. Heizungsanlage nach Anspruch 9, dadurch gekennzeichnet, daß die Steuerung die Umwälzpumpe (35) dann in Betrieb setzt, wenn die Temperatur an den Solarkollektoren (37) einen bestimmten voreingestellten Wert überschreitet.

11. Heizungsanlage nach einem der Ansprüche 9 - 10, dadurch gekennzeichnet, daß die obere Verbindungsleitung (33) zwischen Tank (11) und Zirkulationsbehälter (31) des Solarkreislaufs (30) unterhalb der von den Solarkollektoren (37) kommenden Leitung (39) in den Zirkulationsbehälter (31) mündet und/oder zwischen den beiden oberen Leitungen (39, 33) ein Temperaturfühler (40) an bzw. in dem Zirkulationsbehälter (31) angeordnet ist.

12. Heizungsanlage nach einem der Ansprüche 9 - 11, dadurch gekennzeichnet, daß die Wassermenge im Solarkreislauf klein gegenüber der Wassermenge im Tank (11) ist, der/die Zirkulationsbehälter (16, 31) etwa die gleiche Höhe wie der Tank (11) und zylindrische Form mit einem Durchmesser von zwischen etwa 10 und etwa 50 cm aufweisen und das Volumen des Zirkulationsbehälters (16, 31) so ausgewählt ist, daß die Unruhe in den Kreisläufen nicht auf den Tank (11) übergreift und dessen Schichtung erhalten bleibt und im Bereich von etwa 1 % des Tankvolumens liegt.

13. Verwendung einer Heizungsanlage nach einem der Ansprüche 7 - 12, zum Beheizen eines Gebäudes nach dem Verfahren nach einem der Ansprüche 1 - 6.

## Claims

1. Process for heating a building with a heating circuit (12) having at least one heater (13) and through which circulates water driven by a pump (15) and in which when there is a demand for heat the water is drawn from the heating circuit (12) and passed into a tank (11) containing water at a higher temperature and the water drawn from the heating circuit (12) is replaced by hotter water from the tank (11), characterized in that the water in the heating circuit (12) is passed through a circulation container (16) located roughly level with the tank (11) and from whose lower area is drawn the water and into whose upper area is introduced the hotter water at a point below the further extending line (17).

2. Process according to claim 1, characterized in that for determining the heat demand the ambient temperature of the room to be heated and the temperature in the upper area of the circulation container (16) is taken into account and is preferably measured at a point located between the introduction point of the hotter water from the tank (11) and the further extending line (17).

3. Process according to one of the preceding claims, characterized in that the water in the tank (11) is heated by a solar plant with a solar circuit (30) containing at least one solar cell (37) and preferably the water in the solar circuit (30) is passed through a circulation container (31) positioned roughly level with the tank (11) and is removed from the circulation container (31) of the solar circuit (30) at a point below the opening of the line (39) from the solar cells (37).

4. Process according to one of the preceding claims, characterized in that, if the water temperature in the circulation container (31) is higher than an average temperature of the tank (11), water is drawn from the upper area of the circulation container (31) and passed into the upper area of the tank (11) and is replaced by water from the lower area of the tank (11), which is introduced into the lower area of the circulation container (31).

5. Process according to one of the claims 3 or 4, characterized in that the flow through the tank (11) is in secondary flow and/or the heating circuit (12) and the solar circuit (30) are pressureless.

6. Process according to one of the claims 3 to 5, characterized in that the water circulation in the solar circuit (30) is started up by a pump (35) if the temperature at the solar cells (37) exceeds a given, preset value.

7. Heating installation for performing the process according to claim 1, with a heating circuit (12) through which flows water and having at least one heater (13), as well as a temperature control, characterized in that the heating circuit (12) contains a circulation container (16), which is at roughly the same level as a water tank (11) and is connected to the latter in its upper and lower areas by means of in each case one line (21, 22) and in one of the lines (21, 22) is provided a pump (23) controllable by the temperature control and which in the case of the existence of a demand for heat forms a connection between the circulation container (16) and the water tank (11) and in which the upper line (21) in the circulation container (16) issues below the line (17) of the heating circuit (12) leading to the heaters (23).

8. Heating installation according to claim 7, characterized in that the pump (23) is located in the lower line (22) and operates in the direction from the heating circuit (12) to the water tank (11) and that in the height between the two lines (17, 21) a temperature sensor (20) is located on or in the circulation container (16).

9. Heating installation according to claim 7 or 8, characterized in that it has a solar circuit (30) containing at least one solar cell (37) a circulating pump (35) and a circulation container (31) roughly level with the tank (11), the circulation container (31) being connected by in each case one line to the tank (11) in the upper and lower areas thereof and a connection between the circulation container (31) and the tank (11) can in particular be produced by a control of the solar plant in such a way that in the upper line (33) is located a pump (34) operating in the direction from the solar circuit (30) to the tank (11) and which is controlled by a control if the temperature in the circulation container (31) is higher than the temperature of the tank (11) in the central region thereof.

10. Heating installation according to claim 9, characterized in that the control puts the circulating pump (35) into operation if the temperature at the solar cells (37) exceeds a given, preset value.

11. Heating installation according to one of the claims 9 or 10, characterized in that the upper connecting line (33) between the tank (11) and the circulation container (31) of the solar circuit (30) issues into the circulation container (31) below the line (39) from the solar cells (37) and/or between the two upper lines (39, 33) is provided a temperature sensor (40) on or in the circulation container (31).

12. Heating installation according to one of the claims 9 to 11, characterized in that the water quantity in the solar circuit is small compared with the water quantity in the tank (11), the circulation containers (16, 31) having roughly the same height as the tank (11) and a cylindrical shape with a diameter between approximately 10 and approximately 50 cm and the volume of the circulation container (16, 31) is so selected that the instability in the circuits does not extend to the tank (11) and its stratification is maintained and is approximately in the range of 1 % of the tank volume.

13. Use of a heating installation according to one of the claims 7 to 12 for heating a building according to the process of one of the claims 1 to 6.

## Revendications

1. Procédé pour le chauffage d'un immeuble comportant un circuit de chauffe (12) présentant au moins un radiateur (13) à travers lequel circule de l'eau entraînée par une pompe (15), sur lequel, en cas de besoin calorique, l'eau est extraite du circuit (12) et dirigée vers un réservoir (11) contenant de l'eau à une température plus élevée, l'eau extraite du circuit (12) étant alors remplacée par de l'eau plus chaude provenant dudit réservoir (11), caractérisé par le fait que l'eau se trouvant dans le circuit (12) est conduite à travers un réservoir de circulation (16) disposé sensiblement au même niveau que le réservoir (11), l'eau étant extraite de la partie inférieure dudit réservoir (16) et l'eau plus chaude introduite dans sa partie supérieure, en un point situé plus bas que la conduite (17), assurant la conduction ultérieure de l'eau.

2. Procédé selon la revendication 1, caractérisé par le fait que, pour déterminer le besoin calorique, sont prises en considération, d'une part, la température ambiante du local à chauffer et, d'autre part, la température qui règne dans la partie supérieure du réservoir de circulation (16), laquelle est mesurée de préférence en un point situé entre le point d'introduction de l'eau plus chaude venant du réservoir (11) et la conduite (17) assurant la conduction ultérieure de l'eau.

3. Procédé selon l'une des revendications précédentes, caractérisé par le fait que l'eau se trouvant à l'intérieur du réservoir (11) est chauffée par une installation solaire comportant un circuit solaire (30) contenant au moins un collecteur solaire (37), tandis que, de préférence, l'eau se trouvant dans le circuit solaire (30) est conduite à travers un réservoir de circulation (31) disposé sensiblement au même niveau que le réservoir (11) et prélevée de ce réservoir de circulation (31) du circuit solaire (30) en un point situé plus bas que l'orifice de la conduite (39) venant des collecteurs solaires (37).

4. Procédé selon l'une des revendications précédentes, caractérisé par le fait que, lorsque la température de l'eau dans le réservoir de circulation (31) est supérieure à une température moyenne du réservoir (11), de l'eau est prélevée de la partie supérieure du réservoir de circulation (31), conduite dans la partie supérieure du réservoir (11) et remplacée par de l'eau venant de la partie inférieure dudit réservoir (11), et introduite ultérieurement dans la partie inférieure du réservoir de circulation (31).

5. Procédé selon l'une des revendications 3 à 4, caractérisé par le fait que le réservoir (11) est parcouru par un courant secondaire et/ou que le circuit de chauffe (12) et le circuit solaire (30) ne sont pas sous pression.

6. Procédé selon l'une des revendications 3 à 5, caractérisé par le fait que la circulation d'eau dans le circuit solaire (30) est effectuée par une pompe (35) lorsque la température qui règne sur les collecteurs solaires (37) dépasse une valeur définie prédéterminée.

7. Installation de chauffage pour la mise en oeuvre du procédé selon la revendication 1, comportant un circuit de chauffe (12) parcouru par de l'eau, muni d'au moins un radiateur (13), ainsi qu'une régulation de température, caractérisée par le fait que le circuit de chauffe (12) contient un réservoir de circulation (16) qui est placé sensiblement au même niveau qu'un réservoir d'eau (11) et relié à ce dernier dans sa zone supérieure et sa zone inférieure par, respectivement, une conduite (21, 22), tandis que dans l'une des conduites (21, 22) est disposée une pompe (23) pouvant être commandée par la régulation de température et qui, en présence d'un besoin calorique, établit une liaison entre le réservoir de circulation (16) et le réservoir d'eau (11), la conduite supérieure (21) débouchant dans le réservoir de circulation (16) à un niveau situé plus bas que la conduite (17) du circuit de chauffage (12) menant aux radiateurs (23).

8. Installation de chauffage selon la revendication 7, caractérisée par le fait que la pompe (23) est disposée dans la conduite inférieure (22) et que sa direction de refoulement va du circuit de chauffe (12) vers le réservoir d'eau (11), et par le fait qu'à un niveau situé entre les deux conduites (17, 21), à l'intérieur ou sur le réservoir de circulation (16), est disposée une sonde thermique (20).

9. Installation de chauffage selon la revendication 7 ou 8, caractérisée par le fait qu'elle présente un circuit solaire (30) contenant au moins un collecteur solaire (37), une pompe de circulation (35) et un réservoir de circulation (31), disposés sensiblement au même niveau que le réservoir (11), le réservoir de circulation (31) étant relié au réservoir (11), dans la partie supérieure et dans la partie inférieure, par respectivement une conduite et par le fait qu'une liaison entre le réservoir de circulation (31) et le réservoir (11) peut être établie par une régulation de l'installation solaire, en particulier par le fait que, dans la conduite supérieure (33), est disposée une pompe (34) dont la direction de refoulement va du circuit solaire (30) vers le réservoir (11) et qui est commandée par une régulation lorsque la température à l'intérieur du réservoir de circulation (31) est supérieure à une température régnant dans le réservoir (11) dans sa zone centrale.

10. Installation de chauffage selon la revendication 9, caractérisée par le fait que la régulation met en service la pompe de circulation (35) si la température qui règne dans les collecteurs solaires (37) dépasse une valeur définie prédéterminée.

11. Installation de chauffage selon l'une des revendications 9 à 10, caractérisée par le fait que la conduite de liaison supérieure (33) entre le réservoir (11) et le réservoir de circulation (31) du circuit solaire (30) débouche dans le réservoir de circulation (31) à un niveau plus bas que celui de la conduite (39) venant des collecteurs solaires (37), et/ou que, entre les deux conduites supérieures (39, 33), est disposée une sonde thermique (40) sur ou à l'intérieur du réservoir de circulation (31).

12. Installation de chauffage selon l'une des revendications 9 à 11, caractérisée par le fait que la quantité d'eau se trouvant dans le circuit solaire est faible par rapport à la quantité d'eau se trouvant dans le réservoir (11), que le ou les réservoirs de circulation (16, 31) présentent sensiblement la même hauteur que le réservoir (11) et la même forme cylindrique d'un diamètre compris entre environ 10 et environ 50 cm, et que le volume du réservoir de circulation (16, 31) est sélectionné de telle sorte que l'agitation qui règne dans les circuits ne se propage pas au réservoir (11) dont la stratification reste conservée et se situe au voisinage d'environ 1 % du volume qu'il contient.

13. Utilisation d'une installation de chauffage selon l'une des revendications 7 à 12, pour le chauffage d'un immeuble selon le procédé conforme à l'une des revendications 1 à 6.
